# EUROPÄISCHE PATENTANMELDUNG

(11) **EP 2 260 821 A2**
(43) Veröffentlichungstag der Anmeldung: **15.12.2010**
(21) Anmeldenummer: 10165466.3
(22) Anmeldetag: 10.06.2010
(51) Int. Cl.: A61H 1/00, A01K 15/02

(54) **Trainingseinrichtung für vierbeinige Tiere**

(30) Priorität: 10.06.2009 DE 202009008083 U
(71) Anmelder: Wilhelm, Christian, 86865 Oberneufnach (DE)
(72) Erfinder: Wilhelm, Christian, 86865 Oberneufnach (DE)
(74) Vertreter: Jordan, Volker Otto Wilhelm

(57) **Zusammenfassung**

Trainingsvorrichtung (10) für die Stimulation und das Training des Bewegungsapparats eines vier Extremitäten aufweisenden Tieres, umfassend wenigstens zwei voneinander separat ausgebildete und bezüglich einer Ständeranordnung beweglich gelagerte Aufnahmeplatten (10a, 10b, 10c, 10d) zum Aufnehmen der vier Extremitäten eines auf der Trainingsvorrichtung (10) stehenden Tieres, sowie wenigstens eine den Aufnahmeplatten (10a, 10b, 10c, 10d) zugeordnete Antriebsanordnung mit wenigstens einem elektromechanischen Aktuator oder Elektromotor, mittels welcher die Aufnahmeplatten (10a, 10b, 10c, 10d) in Schwingungen versetzbar sind.

## Beschreibung

Die Erfindung betrifft eine Trainingsvorrichtung für die Stimulation und das Training des Bewegungsapparats eines vier Extremitäten aufweisenden Tieres.

Trainingsvorrichtungen für die Stimulation und das Training des Bewegungsapparats von Menschen sind im Stand der Technik bereits bekannt. Beispielsweise offenbart die DE 20 2006 006 828 U1 eine Trainingsvorrichtung, bei welcher eine zu trainierende Person mit beiden Beinen auf einer wippenähnlichen Aufnahmeplatte steht, welche mittels einer mit einem Elektromotor versehenen Antriebsanordnung in Schwingungen versetzt wird. Die von der wippenähnlichen Aufnahmeplatte auf die Person übertragenen Schwingungen führen dabei zu einer Stärkung von dessen Muskulatur, insbesondere im Bein- und Rückenbereich.

Als weiterer einschlägiger Stand der Technik ist beispielsweise auf DE 196 34 396 B4, US 5,273,028 und US 1,709,410 zu verweisen.

Auch Tiere weisen häufig im Bein- und Rückenbereich, beispielsweise alters- oder verletzungsbedingt, Leiden auf. Hierbei wird im Hinblick auf die vorliegende Erfindung an Tiere mit vier Extremitäten gedacht, wobei mit den Extremitäten insbesondere Beine gemeint sind, auf welchen das Tier normalerweise steht bzw. geht. Gerade bei Tieren, die einen hohen wirtschaftlichen Wert aufweisen, wie beispielsweise Pferde, die im Hochleistungsportbereich eingesetzt werden, oder auch bei Haustieren, wie beispielsweise Hunde oder Katzen, zu denen ihre Besitzer eine starke emotionale Bindung verspüren, besteht häufig ein hohes Interesse daran, die Leiden der Tiere schnell zu lindern, so dass selbige möglichst bald wieder bei Wohlbefinden und ggf. zu sportlichen Zwecken einsatzfähig sind. Es ist daher Aufgabe der vorliegenden Erfindung, eine Trainingsvorrichtung bereitzustellen, mittels welcher der Bewegungsapparat eines vierbeinigen Tieres, insbesondere im Bein- und Rückenbereich, effektiv trainiert werden kann, so dass die Muskulatur gestärkt wird und entsprechende Leiden des Tieres gelindert werden.

Die oben genannte Aufgabe wird erfindungsgemäß durch den unabhängigen Anspruch 1 gelöst, wobei vorteilhafte Ausgestaltungen Gegenstand der abhängigen Ansprüche 2 bis 20 und der Beschreibung sind.

Gemäß dem unabhängigen Anspruch 1 wird eine Trainingsvorrichtung für die Stimulation und das Training des Bewegungsapparats eines vier Extremitäten aufweisenden Tieres bereitgestellt, welche wenigstens zwei voneinander separat ausgebildete und bezüglich einer Ständeranordnung beweglich gelagerte Aufnahmeplatten zum Aufnehmen der vier Extremitäten eines auf der Trainingsvorrichtung stehenden Tieres, sowie wenigstens eine den Aufnahmeplatten zugeordnete Antriebsanordnung mit wenigstens einem elektromechanischen Aktuator oder Elektromotor, mittels welcher die Aufnahmeplatten in Schwingungen versetzbar sind, umfasst.

Indem den Aufnahmeplatten, auf welchen das vierbeinige Tier steht, Zwangsbewegungen in Form von Schwingungen erteilt werden, muss das Tier bewusst oder unbewusst zum Halten des Gleichgewichts ständig kleine Ausgleichsbewegungen vollführen, wodurch die Muskulatur des Tieres, insbesondere im Bein- und Rückenbereich, gestärkt wird. Dies kann beispielsweise für Dackel wichtig sein, die bekanntermaßen im Alter häufig an der so genannten Dackellähmung erkranken, wobei das Rückgrad des Tieres stark in Mitleidenschaft gezogen wird. Durch eine regelmäßige Stärkung der Rückenmuskulatur kann diese Krankheit gelindert oder sogar ganz verhindert werden.

Zudem kann die erfindungsgemäße Trainingsvorrichtung nicht nur zur Stärkung, sondern auch zur Lockerung der Muskulatur eingesetzt werden. Damit wird es möglich, beispielsweise Sportpferde vor dem eigentlichen Sporttraining aufzuwärmen oder/und nach dem eigentlichen Sporttraining die Regeneration des Tieres zu beschleunigen. Auch erhöhen die ständig von dem zu trainierenden Tier auszuführenden Ausgleichsbewegungen dessen Standsicherheit, wobei besonders der Gleichgewichtssinn gefördert wird. Ferner kann die erfindungsgemäße Trainingsvorrichtung einem Tier nach einer Bänderverletzung helfen, die Bänder schneller wieder aufzubauen.

Es sei noch angemerkt, dass die der Aufnahmeplatten zugeordnete Antriebsanordnung vorzugsweise neben dem oben erwähnten elektromechanischen Aktuator oder Elektromotor auch noch ein Getriebeelemente aufweisendes Getriebe umfasst, wobei die Getriebeelemente für jede der wenigstens zwei Aufnahmeplatten wenigstens eine Kraftübertragungskette zwischen der jeweiligen Aufnahmeplatte und dem wenigstens einen elektromechanischen Aktuator oder Elektromotor bilden.

Es ist das Verdienst des Erfinders, erkannt zu haben, dass das Grundprinzip, einem Körper Zwangsbewegungen zu erteilen, um dessen Bewegungsapparat zu stimulieren und zu trainieren, nicht nur auf den Menschen, sondern auch auf vierbeinige Tiere anwendbar ist, und es ist sein Verdienst, Zeit und geistige Arbeit investiert zu haben, um herauszufinden, wie eine entsprechende Trainingsvorrichtung für Tiere konstruiert werden könnte.

Als eine erste bevorzugte Ausführungsform wird eine Trainingsvorrichtung vorgeschlagen, die genau vier Aufnahmeplatten zum Aufnehmen von jeweils einer Extremität eines auf der Trainingsvorrichtung stehenden Tieres umfasst. Indem für jedes Bein des Tieres eine eigene Aufnahmeplatte bereitgestellt ist, kann eine sehr hohe Flexibilität hinsichtlich der individuellen Einstellbarkeit der den Extremitäten zu erteilenden Zwangsbewegungen erreicht werden.

Alternativ wird als zweite Ausführungsform jedoch auch vorgeschlagen, dass die Trainingsvorrichtung genau zwei Aufnahmeplatten zum Aufnehmen von jeweils zwei Extremitäten des Tieres umfasst. Hierdurch kann nämlich eine relativ kostengünstige Realisierung der Trainingsvorrichtung erreicht werden, da nur verhältnismäßig wenig Einzelteile benötigt werden. Insbesondere ist es nicht nötig, vier unabhängige Kraftübertragungsketten zwischen den jeweiligen Aufnahmeplatte und dem wenigstens einen elektromechanischen Aktuator oder Elektromotor zu bilden, sondern die Vorrichtung kommt mit zwei Kraftübertragungsketten aus.

Weiterbildend wird als eine erste Variante vorgeschlagen, dass eine der zwei Aufnahmeplatten dazu geeignet ist, die beiden vorderen Extremitäten eines auf der Trainingsvorrichtung stehenden Tieres aufzunehmen, während die andere der beiden Aufnahmeplatten dazu geeignet ist, die beiden hinteren Extremitäten des Tieres aufzunehmen. Da die meisten vierbeinigen Tiere, wie beispielsweise Pferde oder Hunde, in der Regel eine größere Erstreckung in ihrer Längsrichtung als in ihrer Breitenrichtung aufweisen, können die beiden Aufnahmeplatten bei dieser Variante relativ kompakt, ggf. in etwa quadratisch, ausgeführt sein, was insbesondere dann, wenn die Trainingsvorrichtung zerlegbar ist, den Vorteil hat, dass sich die Aufnahmeplatten relativ platzsparend verstauen lassen.

Alternativ wird hingegen als zweite Variante vorgeschlagen, dass eine der zwei Aufnahmeplatten dazu geeignet ist, die beiden linken Extremitäten eines auf der Trainingsvorrichtung stehenden Tieres aufzunehmen, während die andere der beiden Aufnahmeplatten dazu geeignet ist, die beiden rechten Extremitäten des Tieres aufzunehmen. Diese Variante weist gegenüber der ersten Variante den Vorteil auf, dass, zumindest, wenn die Aufnahmeplatten bezüglich einer ihnen zugeordneten Schwenkachse jeweils wippenähnlich gelagert sind, den jeweiligen Extremitäten des Tieres auf einfache Weise eine Zwangsbewegung mit relativ großer Hubamplitude erteilt werden kann, da die Extremitäten des Tieres durchschnittlich einen größeren Abstand zu den Schwenkachsen aufweisen, als dies bei der ersten, oben beschriebenen Variante der Fall ist.

Für alle bisher oben beschriebenen Ausführungsformen und Varianten wird es bevorzugt, wenn die Aufnahmeplatten relativ zu der Ständeranordnung schwenkbar gelagert sind und mittels der Antriebsanordnung in eine Wipp- oder Schwenkbewegung umfassende Schwingungen versetzbar sind. Es ist beispielsweise denkbar, dass ähnlich wie bei der Trainingsvorrichtung für Menschen, die in der oben bereits genannten DE 20 2006 006 828 U1 offenbart ist, die Aufnahmeplatten jeweils wippenähnlich bezüglich einer jeweiligen Schwenkachse gelagert sind. Hierzu sei angemerkt, dass die Schwenkachse nicht permanent ortsfest sein muss, sondern dass auch eine leicht schwimmende Lagerung mit ortsvariabler Schwenkachse möglich ist, wie dies ebenfalls aus der DE 20 2006 006 828 U1 bekannt ist, deren Offenbarung hiermit vollinhaltlich in Bezug genommen und zum Teil der Offenbarung der vorliegenden Anmeldung gemacht wird.

Es sei jedoch an dieser Stelle darauf hingewiesen, dass alternativ eine Übertragung von Schwingungen, insbesondere von Vibrationen, auf die Aufnahmeplatten vermittels einer Mehrzahl von elektromechanischen Aktuatoren, wie beispielsweise Piezoelemente, durchaus auch denkbar ist. Es wird beispielsweise auf in Frage kommende Lösung gemäß US 5,273,028 verwiesen.

Um das Training möglichst effizient zu gestalten, wird vorgeschlagen, dass die wenigstens eine Antriebsanordnung derart einstellbar ist, dass der bzw. den jeweils auf der Aufnahmeplatte aufgenommenen Extremität bzw. Extremitäten eines auf dem Trainingsgerät stehenden Tieres eine durchschnittliche Hubhöhe von wahlweise etwa 0 cm bis etwa 15 cm erteilt werden kann. Selbstverständlich hängt die zu erteilende Hubhöhe von verschiedenen Faktoren, wie beispielsweise der Größe des zu trainierenden Tieres, der angestrebten Trainingsintensität und auch der Anregungsfrequenz, ab. Eine Einstellung der Hubhöhe auf 0 cm bedeutet dabei, dass die sich auf der dazugehörigen Aufnahmeplatte befindliche Extremität bzw. befindlichen Extremitäten des Tieres keine Zwangsbewegung erfährt bzw. erfahren. Dies kann z. B. dann sinnvoll sein, wenn gezielt nur eine bestimmte Körperregion des Tieres trainiert werden soll, zum Beispiel nur die Muskulatur der Vorderbeine.

Besonders vorteilhaft ist es, wenn mehrere verschiedene, den Aufnahmeplatten zugeordnete Antriebsanordnungen individuell einstellbar sind. Hierdurch kann nämlich das Training optimal auf die individuellen Bedürfnisse des Tieres abgestimmt werden.

Um beispielsweise die Schwingungsfrequenz einstellen zu können, mit welcher den Extremitäten des Tieres Schwingungen erteilt werden, wird vorgeschlagen, dass eine die Antriebsanordnung steuernde Steuervorrichtung zum wahlweisen Einstellen wenigstens einer Aufnahmeplatten-Schwingungsfrequenz bereitgestellt wird. Vorzugsweise ist dabei die Aufnahmeplatten-Schwingungsfrequenz zwischen etwa 0,5 Hz und etwa 5 Hz, vorzugsweise zwischen etwa 1 Hz und etwa 30 Hz einstellbar. In diesen Frequenzbereichen werden nämlich die Muskeln besonders effizient angeregt. Diese Frequenzen entsprechen der normalen Geh- oder Lauffrequenz von vielen vierbeinigen Tieren oder liegen darüber.

Um eine größtmögliche Flexibilität bei dem Training des Tieres zu ermöglichen, wird ferner vorgeschlagen, dass die Steuervorrichtung ein individuelles Einstellen der Aufnahmeplatten-Schwingungsfrequenz für jede Aufnahmeplatte des Trainingsgeräts ermöglicht. Somit kann beispielsweise bei Bedarf die Muskulatur eines Pferdes, welches auf den Einsatz im Springreitsport spezialisiert ist, im Bereich der Hinterbeine stärker stimuliert und trainiert werden, als im Bereich der Vorderbeine.

Insbesondere im Hinblick auf das Training von Pferden, ist es vorteilhaft, wenn die Steuervorrichtung geeignet ist, die wenigstens zwei Aufnahmeplatten derart anzusteuern, dass wahlweise verschiedene Gangarten eines auf dem Trainingsgerät stehenden Tieres, insbesondere Passgang und Kreuzgang, simuliert werden können. Die meisten Pferderassen neigen von Natur aus zum Kreuzgang, während einige wenige Pferderassen, wie beispielsweise Isländer, von Natur aus zum Passgang neigen. Durch die Einstellbarkeit der Trainingsvorrichtung vermittels der Steuervorrichtung können somit verschiedene Pferderassen gemäß ihrer natürlichen Gangart trainiert werden, ohne dass größere Anpassungen an der Trainingsvorrichtung vonnöten sind.

Möchte man das Tier nicht nur im Stand trainieren, sondern ihm zugleich noch ein Lauftraining erteilen, so wird vorgeschlagen, dass die Aufnahmeplatten mit Laufbändern ausgestattet sind, zur Erleichterung eines Geh- oder Lauftrainings eines auf der Trainingsvorrichtung stehenden Tieres. Hierbei kommt es zu einer Überlagerung von zwei unterschiedlichen Trainingseffekten, nämlich zum einen der Effekt des Lauftrainings und zum anderen der Effekt der Ausgleichsbewegungen, welche das Tier aufgrund der seinen Extremitäten erteilten Schwingbewegungen vollführt. Zum Beispiel kann durch eine derartige, Laufbänder umfassende Trainingsvorrichtung das Gehen oder Laufen im unebenen Gelände simuliert werden.

Um die Anforderungen an das zu trainierende Tier vorgeben zu können, wird weiterbildend vorgeschlagen, dass die Laufbänder motorisch antreibbar sind. Dabei wird es besonders bevorzugt, wenn die Geschwindigkeit der Laufbänder wahlweise einstellbar ist. Somit kann je nach die Anforderung an das Tier der jeweils gegeben Situation individuell eingestellt werden.

Damit das zu trainierende Tier nicht selbständig oder weil es das Gleichgewicht verliert, die Trainingsvorrichtung vor Beendigung der Trainingseinheit verlassen kann, wird vorgeschlagen, dass das Trainingsgerät einen Rahmen umfasst, mit welchem ein auf dem Trainingsgerät stehendes Tier in einer Trainingsstellung gehalten werden kann. Hier kann für Pferde zum Beispiel an ähnliche Rahmen gedacht werden, wie sie bei automatischen Melkanlagen für Kühe bekannt sind.

Ferner ist es vorteilhaft, wenn an der Trainingsvorrichtung Anbringelemente für Spannmittel, insbesondere für Spanngurte, vorgesehen sind, zum Ausüben einer in im Wesentlichen vertikale Richtung wirkenden Druckkraft auf ein auf dem Trainingsgerät stehendes Tier. Durch diese zusätzliche Belastung können nämlich die dem zu trainierenden Tier erteilten Zwangsbewegungen in Form von Schwingungen noch effizienter zu einem Muskelaufbau im Bein- und Rückenbereich führen. Bei einem Pferd können die Spanngurte beispielsweise so über den Rücken geführt werden, dass dieses in etwa wie durch das Gewicht eines Reiters belastet wird.

Alternativ ist es natürlich auch denkbar, das Tier mittels Spannmittel, insbesondere Spanngurte, nicht zu belasten, sondern zu entlasten. Dazu können entsprechende Spannmittel beispielsweise über dem Tier an einer Raumdecke oder an einem zu diesem Zweck bereitgestellten Gestell befestigt sein und unter dem Bauch des Tieres hindurchgeführt werden. Eine Entlastung des Tieres während des Trainings ist insbesondere dann wichtig, wenn die Muskeln erst langsam wieder aufgebaut werden müssen, beispielsweise nach einem Unfall, in dessen Folge das Tier für längere Zeit bewegungsunfähig war, so dass sich die Muskeln stark zurückgebildet haben.

Ebenfalls kann zu einer Entlastung des Tieres beitragen, wenn das Training im Wasser stattfindet. Hierzu wird vorgeschlagen, dass die Trainingsvorrichtung derart ausgelegt ist, dass sie auch unter Wasser betrieben werden kann. Insbesondere ist es hierzu nötig, alle mechanischen und elektrischen Teile entsprechend wasserfest zu gestalten.

Im Hinblick auf die vorliegende Erfindung wird insbesondere daran gedacht, dass die Trainingsvorrichtung dafür ausgelegt und dimensioniert sein kann, um den Bewegungsapparat eines Pferdes zu stimulieren und zu trainieren. Entsprechend stabil müssen die Aufnahmeplatten ausgelegt sein und entsprechend groß muss der Abstand der Aufnahmeplatten zueinander sein. Ferner müssen die Aufnahmeplatten selbst auch groß genug ausgebildet sein, um für das Pferd sichere Trittflächen bereitzustellen.

Um gerade im Hinblick auf das Training von großen Tieren, wie insbesondere Pferde, eine Flexibilität bei der örtlichen Errichtung der Trainingsvorrichtung zu gewährleisten, wird vorgeschlagen, dass die Trainingsvorrichtung aus einem wenigstens eine erste Aufnahmeplatte aufweisenden ersten Trainingsgerät und aus einem wenigstens eine zweite Aufnahmeplatte aufweisenden zweiten Trainingsgerät besteht, die gewünschtenfalls separat transportierbar sowie gewünschtenfalls separat einsetzbar sind. Hierbei sei jedoch angemerkt, dass die beiden Trainingsgeräte im Betrieb vorzugsweise miteinander verbunden sind, um eine gesicherte Relativlage zueinander zu gewährleisten, auch wenn die Trainingsvorrichtung im Betrieb stark belastet wird. Ferner wird es bevorzugt, dass die Ansteuerung für beide Trainingsgeräte aufeinander abgestimmt ist. Im Hinblick auf die bevorzugte erste, oben genannte Ausführungsform mit vier Aufnahmeplatten, wäre auch es auch denkbar, dass die Trainingsvorrichtung aus vier entsprechenden Trainingsgeräten besteht, die gewünschtenfalls separat transportierbar sowie gewünschtenfalls separat einsetzbar sind.

Alternativ kann es jedoch auch bevorzugt sein, insbesondere um eine höhere Stabilität der Trainingsvorrichtung zu gewährleisten, dass die Vorrichtung als ein die Aufnahmeplatten aufweisendes baulich zusammenhängendes Trainingsgerät ausgeführt ist.

Die Erfindung wird im Folgenden an Ausführungsbeispielen anhand der beigefügten Zeichnungen näher erläutert werden. Es stellt dar:
- Fig. 1: eine grobschematische Draufsicht auf eine erste Ausführungs- form einer erfindungsgemäßen Trainingsvorrichtung;
- Fig. 2A: eine grobschematische Seitenansicht einer ersten Variante einer in Fig. 1 dargestellten Aufnahmeplatten;
- Fig. 2B: eine grobschematische Seitenansicht einer zweiten Variante einer in Fig. 1 dargestellten Aufnahmeplatte;
- Fig. 3: eine grobschematische Draufsicht einer zweiten Ausführungs- form einer erfindungsgemäßen Trainingsvorrichtung; und
- Fig. 4: eine grobschematische Draufsicht einer dritten Ausführungsform der erfindungsgemäßen Trainingsvorrichtung.

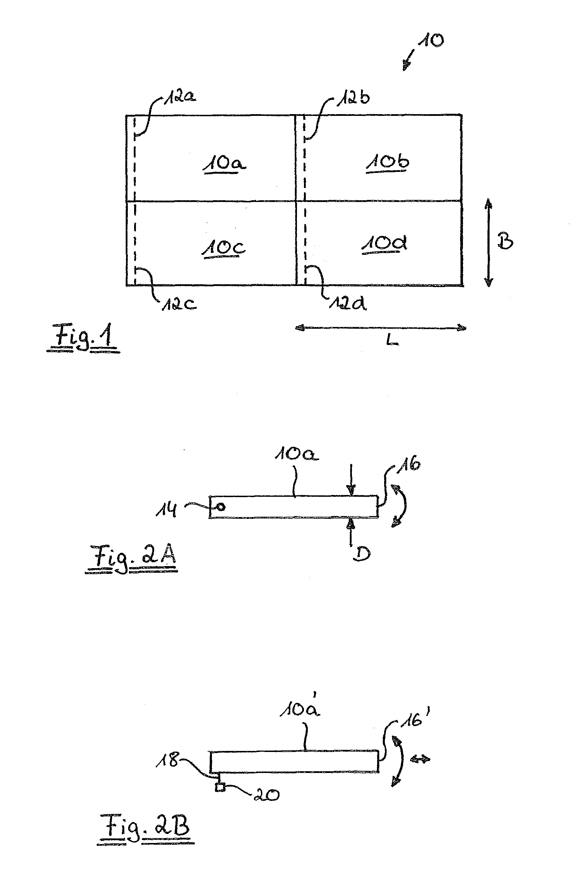

In Fig. 1 ist eine erste bevorzugte Ausführungsform einer erfindungsgemäßen Trainingsvorrichtung in der Draufsicht ganz allgemein mit 10 bezeichnet. Die Trainingsvorrichtung 10 umfasst vier im Wesentlichen identisch und separat voneinander ausgebildete Aufnahmeplatten 10a, 10b, 10c, 10d zum Aufnehmen von jeweils einer Extremität eines vierbeinigen Tieres. Insbesondere ist die in Fig. 1 gezeigte Trainingsvorrichtung zum Stimulieren und Trainieren des Bewegungsapparats eines Pferdes gedacht, welches mit seinem rechten Vorderhuf auf der Aufnahmeplatte 10a, mit seinem rechten Hinterhuf auf der Aufnahmeplatte 10b, mit seinem linken Vorderhuf auf der Aufnahmeplatte 10c und mit seinem linken Hinterhuf auf der Aufnahmeplatte 10d steht.

Die Aufnahmeplatten 10a, 10b, 10c, 10d sind um eine ihnen jeweils zugeordnete (gestrichelt dargestellte) Schwenkachse 12a, 12b, 12c, 12d bezüglich einer (nicht dargestellten) Ständeranordnung schwenkbar. Die einzelnen Aufnahmeplatten 10a, 10b, 10c, 10d werden dabei individuell mittels einer ihnen jeweils zugeordneten (nicht dargestellten) Antriebsanordnung motorisch angetrieben. Bezüglich der Ausgestaltungsmöglichkeiten dieser Antriebsanordnungen sei hier nochmals auf die DE 20 2006 006 828 U1 verwiesen, in der entsprechende Antriebsanordnungen ausführlich dargestellt und beschrieben sind. Eine (ebenfalls nicht dargestellte) Steuervorrichtung steuert dabei die Schwenkbewegung der einzelnen Aufnahmeplatten 10a, 10b, 10c, 10d.

Um ein Pferd gut aufnehmen zu können, sind die Aufnahmeplatten 10a, 10b, 10c, 10d derart dimensioniert, dass sie in Längsrichtung L, d. h. in einer zur jeweiligen Schwenkachse 12a, 12b, 12c, 12d senkrechten Richtung, eine Länge aufweist, die etwa dem Abstand entspricht, welche die Vorderhufe zu den Hinterhufen des Pferdes aufweisen, wenn dieses normal steht. In der Breitenrichtung B, d. h. in einer zur jeweiligen Schwenkachse 12a, 12b, 12c, 12d parallelen Richtung, weisen die Aufnahmeplatten 10a, 10b, 10c, 10d hingegen eine Abmessung auf, welche etwa dem Abstand von linken Hufen zu rechten Hufen entspricht, wenn das Pferd normal steht. Für kleine Pferde, wie beispielsweise Ponnys, können die Aufnahmeplatten somit zum Beispiel eine Länge L von 1 m und eine Breite von 0,5 m aufweisen.

Durch die bevorzugte Dimensionierung der Aufnahmeplatten kann jeder Huf des Pferdes sicher etwa in der Mitte der jeweiligen Aufnahmeplatte 10a, 10b, 10c, 10d platziert werden. Zugleich ist aber auch noch eine gewisse Flexibilität im Hinblick auf die Hufstellung des Pferdes auf den Aufnahmeplatten 10a, 10b, 10c, 10d vorhanden. Wird zum Beispiel das Pferd auf der Trainingsvorrichtung 10 etwas weiter nach vorne geführt, d. h. in Richtung auf die jeweiligen Schwenkachsen 12a, 12b, 12c, 12d zu, so wird auf Grund des Hebelgesetzes den Hufen des Pferdes eine geringer Hubamplitude erteilt, während sich der umgekehrt Effekt einstellt, wenn das Pferd weiter nach hinten geführt wird, d. h. in Richtung von den jeweiligen Schwenkachsen 12a, 12b, 12c, 12d weg. Somit kann die Hubhöhe auf einfache Weise variiert werden, ohne dass hierzu irgendwelche Einstellungen an dem Trainingsgerät 10 selbst nötig sind.

Anzumerken ist noch, dass in der grobschematischen Darstellung der Fig. 1 die einzelnen Aufnahmeplatten 10a, 10b, 10c, 10d so dargestellt sind, als ob sie unmittelbar aneinander angrenzen würden. In der Realität ist zwischen ihnen jedoch jeweils ein Spalt vorgesehen, welcher etwa gerade so groß bemessen ist, dass die einzelnen Aufnahmeplatten 10a, 10b, 10c, 10d unabhängig voneinander um ihre jeweiligen Schwenkachsen 12a, 12b, 12c, 12d geschwenkt werden können, ohne sich dabei zu berühren und ohne sich gegenseitig zu blockieren.

Die Fig. 2A und 2B zeigen zwei alternative Varianten, wie die Aufnahmeplatten 10a, 10b, 10c, 10d hinsichtlich ihrer Lagerung an einem nicht dargestellten Gehäuse ausgeführt sein können. Dargestellt ist in beiden Fällen beispielhaft jeweils nur eine Aufnahmeplatte, nämlich die Aufnahmeplatte 10a bzw. 10a'. Die in Fig. 2A gezeigte Aufnahmeplatte 10a ist an einer gegenüber einem (nicht dargestellten) Gestell der Trainingsvorrichtung 10 ortsfesten Schwenkachse 14 schwenkbar gelagert. Ein von der Schwenkachse 14 am weitesten entfernter Abschnitt 16 der Aufnahmeplatte 10a bewegt sich beim Schwenken auf einem Kreisbogenabschnitt um die Schwenkachse 14 hin und her. Durch eine nicht dargestellte Antriebsanordnung, welche auf die Aufnahmeplatte 10a etwa im Abschnitt 16 von unten angreift, kann der maximale Hub des Abschnitts 16 derart eingestellt werden, dass er in diesem Ausführungsbeispiel zwischen 0 und 16 cm beträgt.

Die in Fig. 2B dargestellte Aufnahmeplatte 10a' ist vermittels einer Blattfeder 18 gelagert, welche ihrerseits in einem bezüglich eines (nicht dargestellten) Gestells ortsfesten Balkenelements eingespannt ist. Diese Art der Lagerung der Aufnahmeplatte 10a' bewirkt, dass die Aufnahmeplatte 10a' nicht um eine bezüglich des (nicht dargestellten) Gestells ortsfeste Schwenkachse schwenkt, sondern dass die momentane Schwenkachse wegen einer variablen Auslenkung der Blattfeder 18 über die Zeit hinweg in einem begrenzten örtlichen Bereich variieren kann. Dies hat zur Folge, dass ein von der Blattfeder 18 am weitesten entfernter Abschnitt 16' nicht nur eine Bewegung auf auf einem Kreisbogenabschnitt vollführt, sondern zudem auch einer gewissen Bewegung in horizontaler Richtung unterworfen ist. Diese beiden sich überlagernden Bewegungen erhöhen, verglichen zu der nur einen Bewegung der in Fig. 2A dargestellten Aufnahmeplatte 10a, den Trainingseffekt und sorgen gleichzeitig für eine gewisse Dämpfung an Orten, wo sich die Bewegungsrichtung der Aufnahmeplatte 10a' umkehrt, was wiederum zu einer Schonung der Gelenke des zu trainierenden Tieres beiträgt. Die genaue Art und Funktionsweise einer solchen Lagerung ist beispielsweise in der DE 20 2006 006 828 U1 beschrieben, auf die an dieser Stelle nochmals verwiesen sei.

Zu den in den Fig. 2A und 2B dargestellten Aufnahmeplatten 10a, 10a' sei noch angemerkt, dass deren Dicke D so gewählt ist, dass die Aufnahmeplatten 10a, 10a' zum einen denen auf sie wirkenden Belastungen standhalten, und zum anderen derart, dass die Gefahr minimiert wird, dass sich zwischen zwei benachbarten Aufnahmeplatten 10a, 10b, 10c, 10d oder zwischen den Aufnahmeplatten 10a, 10b, 10c, 10d und Abschnitten der (nicht dargestellten) Ständeranordnung irgendwelche Körperteil des Tieres, wie zum Beispiel ein Huf, oder einer die Trainingsvorrichtung 10 bedienenden Person, wie zum Beispiel eine Hand, einklemmen können.

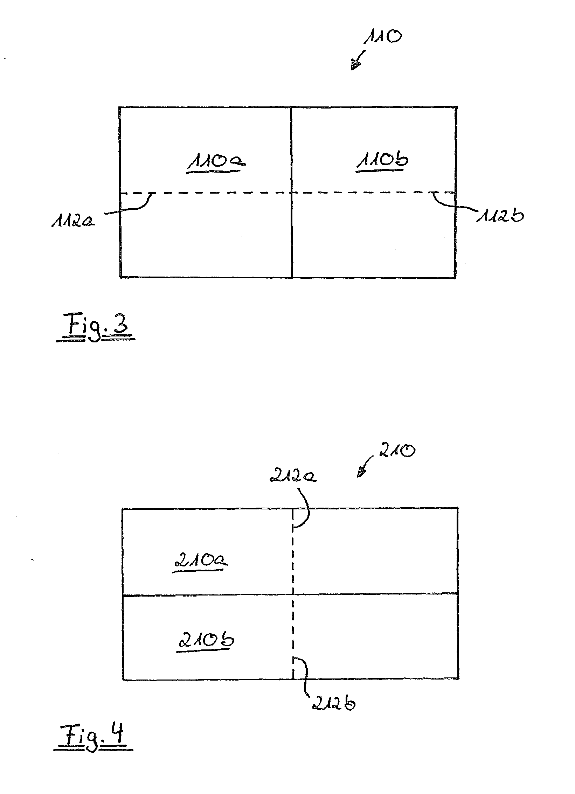

In Fig. 3 ist eine zweite Ausführungsform der erfindungsgemäßen Trainingsvorrichtung ganz allgemein mit 110 bezeichnet. In dieser Ausführungsform umfasst die Trainingsvorrichtung 110 lediglich zwei zueinander separat, aber ebenfalls im Wesentlichen identisch ausgebildeten Aufnahmeplatten 110a, 110b. Diese beiden Aufnahmeplatten 110a, 110b sind bezüglich einer jeweiligen (gestrichelt dargestellten) Schwenkachse 112a, 112b wippenähnlich schwenkbar.

In der in Fig. 3 dargestellten Ausführungsform der Trainingsvorrichtung 110 steht ein Pferd während des Trainingsbetriebs mit seinen beiden Vorderhufen auf der Aufnahmeplatte 110a und mit seinen beiden Hinterhufen auf der Aufnahmeplatte 110b. Dabei sind die Hufe auf den beiden Aufnahmeplatten 110a, 110b derart platziert, dass jeweils ein Huf bezüglich der Schwenkachse 112a bzw. 112b auf der einen Seite der Aufnahmeplatte 110a bzw. 110b steht, während der andere Huf auf der jeweils anderen Seite der Aufnahmeplatte 112a und 112b steht.

Bezüglich der strukturellen Ausgestaltung der Lagerung an den beiden Schwenkachsen 112a, 112b treffen im Wesentlichen die gleichen Möglichkeiten zu, wie oben zu der ersten, in Fig. 1 dargestellten Ausführungsform beschrieben. Auch kann die den Aufnahmeplatten 110a, 110b jeweils zugeordnete Antriebsanordnung im Wesentlichen identisch ausgebildet sein zu jener, die in der in Fig. 1 gezeigten Trainingsvorrichtung 10 verwendet wird.

In Fig. 4 ist eine dritte Ausführungsform der erfindungsgemäßen Trainingsvorrichtung dargestellt, welche sich von der in Fig. 3 gezeigten zweiten Ausführungsform nur hinsichtlich einiger Details unterscheidet. Daher sind in Fig. 4 analoge Teile mit den gleichen Bezugszeichen versehen wie in Fig. 3, jedoch vermehrt um die Zahl 100. Ferner wird die Ausführungsform gemäß Fig. 4 im Folgenden nur insoweit beschrieben, als sie sich von der Ausführungsform gemäß Fig. 3 unterscheidet, auf deren Beschreibung hiermit ansonsten ausdrücklich verwiesen sei.

Die in Fig. 4 dargestellte Trainingsvorrichtung 210 unterscheidet sich von der in Fig. 3 dargestellten Trainingsvorrichtung 110 im Wesentlichen nur durch die Form und Anordnung der Aufnahmeplatten 210a, 210b. Auch hier sind die beiden Aufnahmeplatten 210a, 210b wieder um ihnen zugeordnete Schwenkachsen 212a, 212b bezüglich einer (nicht dargestellten) Ständeranordnung im Wesentlichen wippenähnlich schwenkbar. Jedoch sind die beiden Aufnahmeplatten 210a, 210b derart ausgebildet, dass ein zu trainierendes Pferd beispielsweise mit seinem rechten Vorderhuf und seinem rechten Hinterhuf auf der Aufnahmeplatte 210a steht, während es mit seinem linken Vorderhuf und seinem linken Hinterhuf auf der Aufnahmeplatte 210b steht. Auch hier ist wieder auf jeder der beiden Aufnahmeplatten 210a, 210b jeweils ein Huf auf der einen Seite bezüglich der jeweiligen Schwenkachse 212a bzw. 212b platziert, wohingegen der andere Huf auf der jeweils anderen Seite platziert ist.

Werden in dieser Ausführungsform die beiden Aufnahmeplatten 210a, 210b gleichphasig angesteuert, so kann das Pferd ähnlich wie ein Schauckelpferd bewegt werden. Jedoch wird die gegenphasige Ansteuerung der beiden Aufnahmeplatten 210a, 210b in der Regel bevorzugt, weil hierdurch auch eine Relativbewegung zwischen den beiden Vorderhufen, bzw. zwischen den beiden Hinterhufen erfolgt und der Trainingseffekt somit erhöht wird.

## Patentansprüche

1. Trainingsvorrichtung (10; 110; 210) für die Stimulation und das Training des Bewegungsapparats eines vier Extremitäten aufweisenden Tieres, umfassend wenigstens zwei voneinander separat ausgebildete und bezüglich einer Ständeranordnung beweglich gelagerte Aufnahmeplatten (10a, 10b, 10c, 10d; 110a, 110b; 210a, 210b) zum Aufnehmen der vier Extremitäten eines auf der Trainingsvorrichtung (10; 110; 210) stehenden Tieres, sowie wenigstens eine den Aufnahmeplatten (10a, 10b, 10c, 10d; 110a, 110b; 210a, 210b) zugeordnete Antriebsanordnung mit wenigstens einem elektromechanischen Aktuator oder Elektromotor, mittels welcher die Aufnahmeplatten (10a, 10b, 10c, 10d; 110a, 110b; 210a, 210b) in Schwingungen versetzbar sind.

2. Trainingsvorrichtung (10) nach Anspruch 1, **dadurch gekennzeichnet, dass** die Trainingsvorrichtung (10) genau vier Aufnahmeplatten (10a, 10b, 10c, 10d) zum Aufnehmen von jeweils einer Extremität eines auf der Trainingsvorrichtung (10) stehenden Tieres umfasst.

3. Trainingsvorrichtung (110; 210) nach Anspruch 1, **dadurch gekennzeichnet, dass** die Trainingsvorrichtung (110; 210) genau zwei Aufnahmeplatten (110a, 110b; 210a, 210b) zum Aufnehmen von jeweils zwei Extremitäten des Tieres umfasst.

4. Trainingsvorrichtung (110) nach Anspruch 3, **dadurch gekennzeichnet, dass** eine der zwei Aufnahmeplatten (110a, 110b) dazu geeignet ist, die beiden vorderen Extremitäten eines auf der Trainingsvorrichtung (110) stehenden Tieres aufzunehmen, während die andere der beiden Aufnahmeplatten (110a, 110b) dazu geeignet ist, die beiden hinteren Extremitäten des Tieres aufzunehmen.

5. Trainingsvorrichtung (210) nach Anspruch 3, **dadurch gekennzeichnet, dass** eine der zwei Aufnahmeplatten (210a, 210b) dazu geeignet ist, die beiden linken Extremitäten eines auf der Trainingsvorrichtung (210) stehenden Tieres aufzunehmen, während die andere der beiden Aufnahmeplatten (210a, 210b) dazu geeignet ist, die beiden rechten Extremitäten des Tieres aufzunehmen.

6. Trainingsvorrichtung (10; 110; 210) nach einem vorhergehenden Ansprüche, **dadurch gekennzeichnet, dass** die Aufnahmeplatten (10a, 10b, 10c, 10d; 110a, 110b; 210a, 210b) relativ zu der Ständeranordnung schwenkbar gelagert sind und mittels der Antriebsanordnung in eine Wipp- oder Schwenkbewegung umfassende Schwingungen versetzbar sind.

7. Trainingsvorrichtung (10; 110; 210) nach einem der vorhergehenden Ansprüche, **dadurch gekennzeichnet, dass** die wenigstens eine Antriebsanordnung derart einstellbar ist, dass der bzw. den jeweils auf der Aufnahmeplatte (10a, 10b, 10c, 10d; 110a, 110b; 210a, 210b) aufgenommenen Extremität bzw. Extremitäten eines auf dem Trainingsgerät (10; 110; 210) stehenden Tieres eine durchschnittliche Hubhöhe von wahlweise etwa 0cm bis etwa 15cm erteilt werden kann.

8. Trainingsvorrichtung (10; 110; 210) nach Anspruch 7, **dadurch gekennzeichnet, dass** mehrere verschiedene, den Aufnahmeplatten (10a, 10b, 10c, 10d; 110a, 110b; 210a, 210b) zugeordnete Antriebsanordnungen individuell einstellbar sind.

9. Trainingsvorrichtung (10; 110; 210) nach einem der vorhergehenden Ansprüche, **gekennzeichnet durch** eine die Antriebsanordnung steuernde Steuervorrichtung zum wahlweisen Einstellen wenigstens einer Aufnahmeplatten-Schwingungsfrequenz.

10. Trainingsvorrichtung (10; 110; 210) nach Anspruch 9, **dadurch gekennzeichnet, dass** die Aufnahmeplatten-Schwingungsfrequenz zwischen etwa 0,5Hz und etwa 50Hz, vorzugsweise zwischen etwa 1 Hz und etwa 30Hz einstellbar ist.

11. Trainingsvorrichtung (10; 110; 210) nach Anspruch 9 oder 10, **dadurch gekennzeichnet, dass** die Steuervorrichtung ein individuelles Einstellen der Aufnahmeplatten-Schwingungsfrequenz für jede Aufnahmeplatte (10a, 10b, 10c, 10d; 110a, 110b; 210a, 210b) des Trainingsgeräts (10; 110; 210) ermöglicht.

12. Trainingsvorrichtung (10; 110; 210) nach einem der Ansprüche 9 bis 11, **dadurch gekennzeichnet, dass** die Steuervorrichtung geeignet ist, die wenigstens zwei Aufnahmeplatten (10a, 10b, 10c, 10d; 110a, 110b; 210a, 210b) derart anzusteuern, dass wahlweise verschiedene Gangarten eines auf dem Trainingsgerät (10; 110; 210) gestehenden Tieres, insbesondere Passgang und Kreuzgang, simuliert werden können.

13. Trainingsvorrichtung (10; 110; 210) nach einem der vorhergehenden Ansprüche, **dadurch gekennzeichnet, dass** die Aufnahmeplatten (10a, 10b, 10c, 10d; 110a, 110b; 210a, 210b) mit Laufbändern ausgestattet sind, zur Erleichterung eines Geh- oder Lauftrainings eins auf der Trainingsvorrichtung stehenden Tieres.

14. Trainingsvorrichtung (10; 110; 210) nach Anspruch 13, **dadurch gekennzeichnet, dass** die Laufbänder motorisch, vorzugsweise mit einstellbarer Geschwindigkeit, antreibbar sind.

15. Trainingsvorrichtung (10; 110; 210) nach einem der vorhergehenden Ansprüche, **dadurch gekennzeichnet, dass** das Trainingsgerät (10; 110; 210) einen Rahmen umfasst, mit welchem ein auf dem Trainingsgerät (10; 110; 210) stehendes Tier in einer Trainingsstellung gehalten werden kann.
